# EUROPEAN PATENT SPECIFICATION

(11) **EP 2 110 543 B1**
(45) Date of publication and mention of the grant of the patent: **02.03.2011**
(21) Application number: 08007599.7
(22) Date of filing: 18.04.2008
(51) Int. Cl.: F02M 63/02, F02M 55/02, F02M 55/00, F16K 17/10

(54) **Safety valve**
Sicherheitsventil
Valve de sécurité

(43) Date of publication of application: 21.10.2009
(60) Divisional application: 10005087.1
(73) Proprietor: Caterpillar Motoren GmbH & Co. KG, 24159 Kiel (DE)
(72) Inventor: Abraham, Volker, 24159 Kiel (DE)
(74) Representative: Kramer - Barske - Schmidtchen

(56) References cited:
- WO-A-02/090766
- DE-A1- 10 129 822
- DE-A1- 19 822 671
- DE-A1-102007 000 389
- FR-A- 2 341 087

## Description

### Technical Field

The present disclosure generally refers to a safety valve, in particular but not exclusively, to a safety valve which is configured to be coupled directly to a common rail (CR) of a CR-fuel system of an internal combustion engine, e.g. a large diesel or heavy fuel oil engine for large vehicles such as ships or vessels.

### Background

Conventional fuel injection systems for internal combustion engines may include a common rail system and a high pressure fuel pump for supplying fuel at a high pressure into a common rail within a fuel injection system. A number of injection nozzles are supplied with fuel at a high pressure from the common rail. A corresponding number of fuel supply lines branch off from the common rail and lead to respective injection nozzles. Such common rail systems are widely known and, therefore, a detailed description of the arrangement and the function of such a common rail fuel system can be omitted.

In particular, heavy fuel oil type common rail technology is increasingly being used in engines for large ships or vessels. The fuel within the common rail, e.g., diesel or heavy fuel oil, has a very high pressure. For various reasons, the pressure within the common rail may possibly exceed a predetermined level that may cause damage or perhaps even destruction of the common rail, as well as possibly equipment operating in communication with the common rail.

In US 6,651,627 B2 a fuel rail pulse damper is disclosed. This document mentions that the opening and closing of injectors creates pressure pulsations up and down the fuel rail. These pulsations may result in an undesirable condition, wherein the pressure locally at a given injector may be higher or lower than the pressure, to which the injector is ordinarily calibrated. If the pressure adjacent to the injector within the fuel rail is outside of a given calibrated range, then the fuel delivered when the fuel injector is next opened may be higher or lower than the desired amount. To eliminate the necessity of utilizing sealing rings, a fuel rail with a pulsation damper is provided. This known damper consists of two chambers which are separated by a diaphragm. The damper can be a separate part that is tacked on and subsequently brazed into position or can be an integral feature of the main body of the fuel rail. However, while this known fuel rail pulse damper can be used for compensation of pressure pulsations within a fuel rail, it can not ensure that a predetermined maximum pressure level within the fuel rail is not exceeded. In particular, the known fuel rail pulse damper can not discharge pressurized fuel.

A basic arrangement of heavy fuel common rail injection systems for large engines is published under Rainer W. Jorach, Hermann Doppler and Olaf Altmann, MTZ motortechnische Zeitschrift 61 (2000) 12. Here, a safety valve is mounted on the common rail. This known safety valve ensures that, in case a pressure in excess of a predetermined pressure develops within the common rail, the pressure within the common rail is quickly reduced by allowing pressurized fuel to flow out of the common rail. Due to the high pressure of the fuel discharged from the common rail via the safety valve, a separate pressure tank for the discharged pressurized fuel configured to withstand a high pressure must be disposed downstream of the safety valve. In fact, the pressure tank for collecting the pressurized fuel discharging via the safety valve may be disposed separately from the safety valve such that a connecting pipe may be necessary to connect the safety valve to the pressure tank. Because the pressurized fuel discharging via the safety valve has still a very high pressure, the connecting pipe has to be designed as a double wall pipe.

This known arrangement may be expensive due to the need for a separate pressure tank and the necessary connecting pipe.

DE 101 29 822 A1 shows a pressure limiting valve to be used in connection with a pressure accumulator unit, e.g., a common rail. A closing pin biased by a spring closes an opening providing a fluid connection to the common rail. The spring is accommodated within a chamber having no outlet port. A shaft including a pressure head lies against the valve element. If a predetermined pressure is exceeded, the closing pin retracts against the force of the spring applied to the closing pin via the pressure head. In this position, a fluid communication between the common rail, the inlet opening and a return line is provided. The basic idea of this system is to reduce the pressure in the pressure accumulator unit as long as a threshold is exceeded. However, a minimum pressure in the common rail shall be guaranteed so that the operation of the internal combustion engine can be maintained as long as the pressure in the common rail does not drop below a minimum pressure.

In DE 198 22 671 A1 a pressure limiting valve is shown and includes a first chamber formed by a valve housing and a movable piston formed with a closing pin, and a second chamber in which a spring is accommodated. The spring biases the movable piston and the closing pin formed thereon against a valve seat. Throttle bores connect the first chamber and the second chamber accommodating the spring. The second chamber within the piston is connected to a return line. The throttle bores are part of the moving piston. Accordingly, the second chamber inside of the piston has a variable volume when the piston moves.

FR 2 341 087 shows a pressure limiting valve very similar to the valve shown in DE 198 22 671 A1. Again, a movable piston includes throttle bores which connect a first chamber with a second chamber having a variable volume due to the movable piston and accommodating a spring.

The present disclosure is directed, at least in part, to improving or overcoming one or more aspects of prior systems.

### Summary of the Invention

According to one exemplary aspect of the present disclosure, a safety valve is configured to be coupled to a pressurized device, such as a common rail of an internal combustion engine, and comprises a housing, a first chamber defined within said housing and a second chamber also defined within said housing. The first chamber has a first volume and an inlet port configured to provide a flow connection between said pressurized device and said first chamber. A spring-loaded closing pin is configured to close the inlet port as long as a predetermined pressure is not exceeded within the pressurized device. A spring is accommodated within said first chamber. Said spring biases the closing pin with a predetermined force such that a tip of the closing pin seals a valve seat of said inlet port. The second chamber is in flow connection with the first chamber via at least one throttling bore. The second chamber has a second volume. The second volume is greater than said first volume of said first chamber. In addition, the second chamber an outlet port configured to discharge pressurized fluid from the second chamber. Said at least one throttling bore and the second volume being designed such that a pressure in said second chamber is below a second predetermined pressure.

According to a further aspect of the present disclosure, a common rail injection system for an internal combustion engine, e.g. large engines in which, e.g., diesel or heavy fuel oil is burned, comprises at least one high-pressure pump, a common rail configured to receive pressurized fuel from said high pressure pump, and a safety valve coupled to the common rail. The safety valve is constructed as mentioned above.

In accordance with a further aspect of the present disclosure, a method for protecting a pressurized device, e.g. a common rail, against excessively high pressure within the pressurized device comprises the method steps of opening an inlet port of a first chamber of a safety valve coupled to the pressurized device when a first predetermined pressure within the pressurized device is exceeded by lifting up a tip of a closing pin from a valve seat of said inlet port against a biasing force of a spring accommodated within said first chamber. Then, pressurized fuel within said first chamber is allowed to pass into a second chamber via at least one throttling bore, whereby the pressure of the fuel within said second chamber is reduced below a second predetermined pressure. The method also comprises discharging pressurized fuel from said second chamber.

It is to be understood that both the foregoing general description and the following detailed description are exemplary and explanatory only and are not restrictive of the disclosure.

Other features and aspects of this disclosure will be apparent to the skilled person based upon the following description, the accompanying drawings and the attached claims.

Although preferred embodiments of this invention have been described herein, improvements and modifications may be incorporated therein without departing from the scope of the following claims.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 is a schematic sectional view of a first exemplary embodiment of the present disclosure;
Fig. 2 is a schematic perspective view of a common rail system of a large internal combustion engine, such as a heavy fuel oil engine, in combination with a further embodiment of the present disclosure;
Fig. 3 is a top view of the embodiment shown in Fig. 2;
Fig. 4 is a side view of the embodiment shown in Figs. 2 and 3;
Fig. 5 is a longitudinal sectional view of the embodiment shown in Figs. 2-4,
device is exceeded. Then, pressurized fuel within said first chamber is allowed to pass into a second chamber via at least one throttling port, whereby the pressure of the fuel within said second chamber is reduced below a second predetermined pressure. The method may also comprise discharging pressurized fuel from said second chamber.

It is to be understood that both the foregoing general description and the following detailed description are exemplary and explanatory only and are not restrictive of the disclosure.

Other features and aspects of this disclosure will be apparent to the skilled person based upon the following description, the accompanying drawings and the attached claims.

Although preferred embodiments of this invention have been described herein, improvements and modifications may be incorporated therein without departing from the scope of the following claims.

### Brief Description of the Drawings

The accompanying drawings, which are incorporated herein and constitute a part of the specification, illustrate exemplary embodiments of the disclosure and, together with the description, serve to explain the principles of the disclosure. In the drawings:

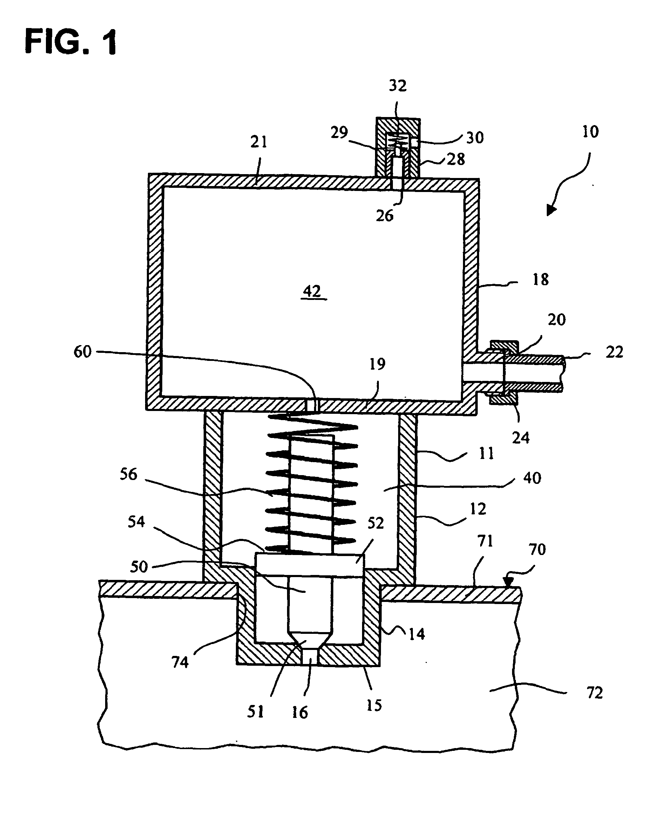

Fig. 1 is a schematic sectional view of a first exemplary embodiment of the present disclosure;

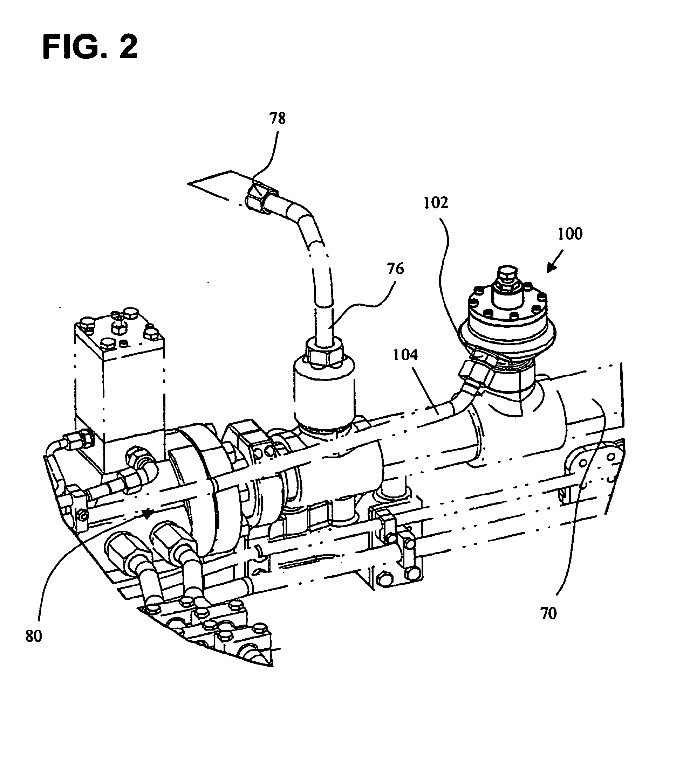

Fig. 2 is a schematic perspective view of a common rail system of a large internal combustion engine, such as a heavy fuel oil engine, in combination with a further embodiment of the present disclosure;

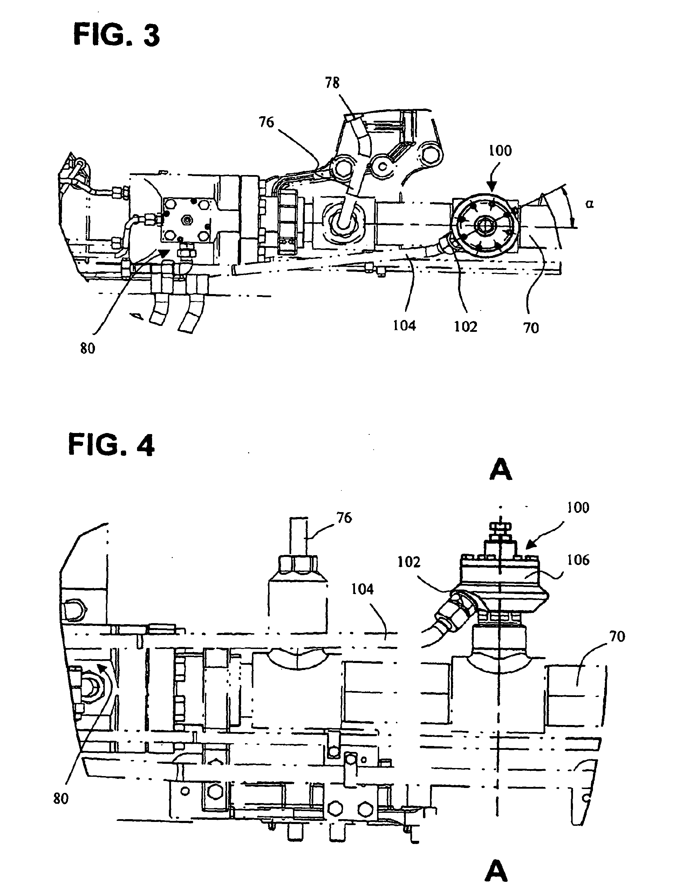

Fig. 3 is a top view of the embodiment shown in Fig. 2;
Fig. 4 is a side view of the embodiment shown in Figs. 2 and 3;

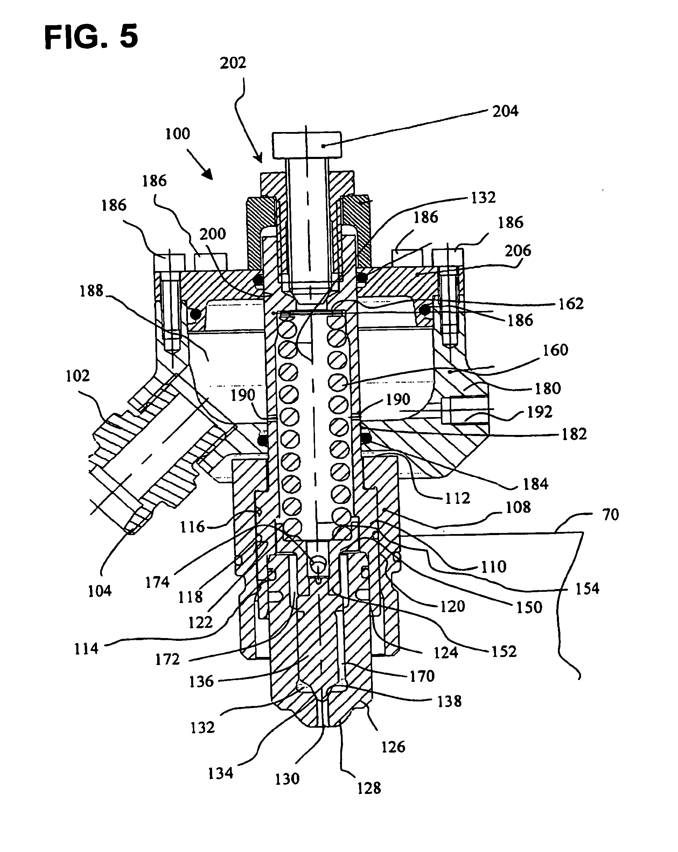

Fig. 5 is a longitudinal sectional view of the embodiment shown in Figs. 2-4,

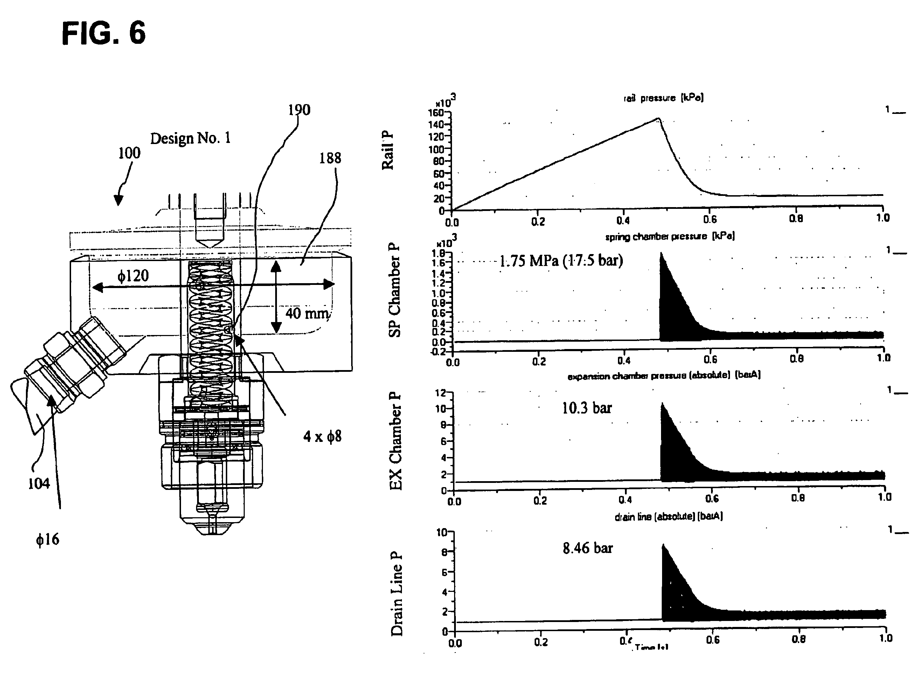

Fig. 6 is a schematical longitudinal sectional view of a further exemplary embodiment of the present disclosure and of associated pressure curves calculated for this exemplary embodiment;

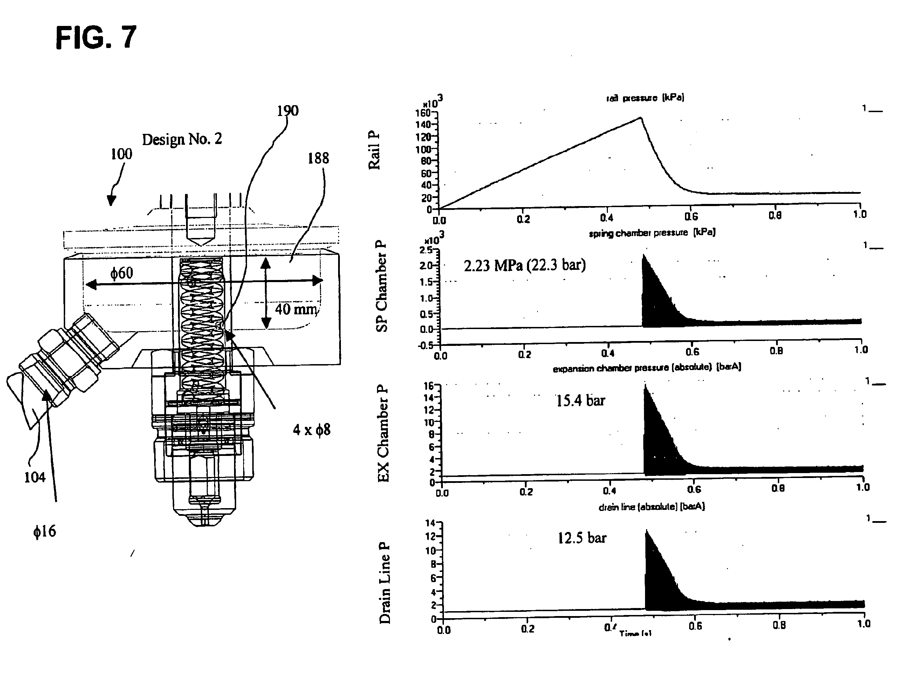

Fig. 7 is a schematical longitudinal sectional view of another exemplary embodiment of the present disclosure and of associated pressure curves calculated for this exemplary embodiment;

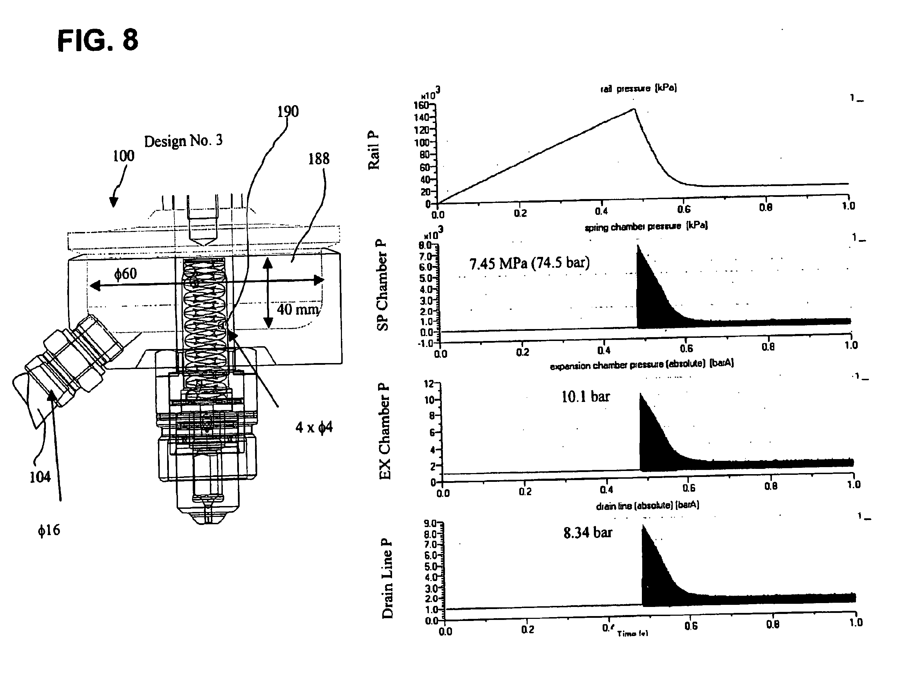

Fig. 8 is a schematical longitudinal sectional view of still another exemplary embodiment of the present disclosure and of associated pressure curves calculated for this exemplary embodiment; and

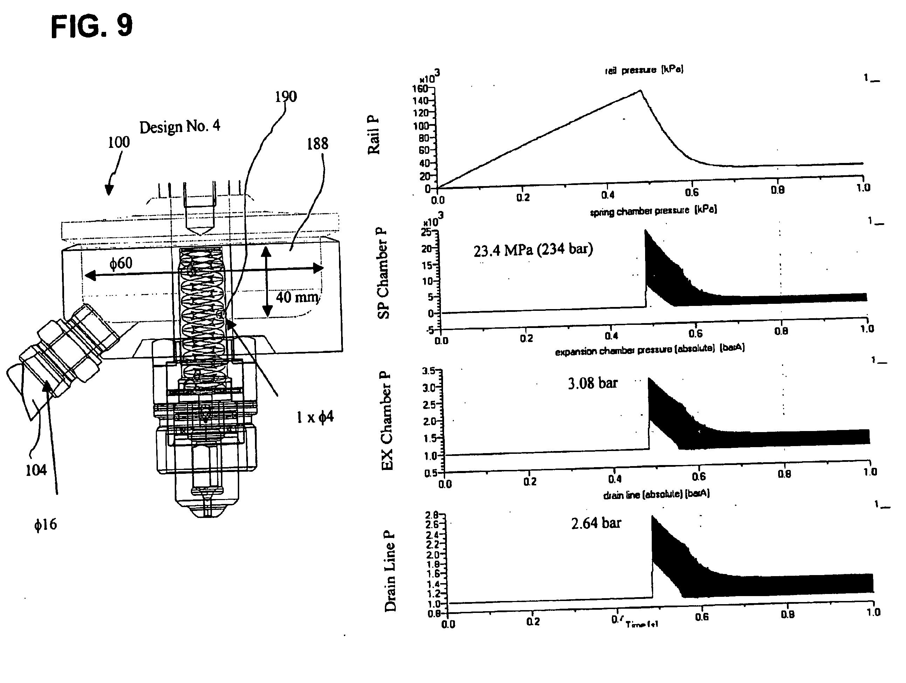

Fig. 9 is a schematical longitudinal sectional view of still another exemplary embodiment of the present disclosure and of associated pressure curves calculated for this exemplary embodiment.

### Detailed Description

A first exemplary embodiment of a safety valve 10 according to the present disclosure coupled to a common rail 70 for supplying fuel, e.g., diesel or heavy fuel oil, to an internal combustion engine, such as a large vessel engine, will first be explained with reference to Fig. 1. This first exemplary embodiment of a safety valve 10 is shown schematically and illustrates a basic structure of a safety valve 10 according to the present disclosure.

As shown in Fig. 1, the safety valve 10 may be coupled to the common rail 70, which is only partly shown. In principle, the common rail 70 is a large pipe having an outer wall 71 and an interior 72, in which pressurized fuel flows and is distributed to various distribution fuel lines 76 (shown in Figs. 2-4) leading to injection nozzles (not shown). The basic arrangement of the common rail 70 is widely known and, therefore, a detailed explanation thereof can be omitted. However, it is noted that the fuel within the common rail 70 may have a very high pressure of up to about 1500 to 2000 bar or even up to 2500 bar.

The safety valve 10 according the first embodiment of the present disclosure has a housing 11, which may comprise a lower housing part 12 and an upper housing part 18. The lower housing part 12 may have a cross-sectional shape of a substantial circular cylinder. The upper housing part 18 also may have a cross-sectional shape of a substantial circular cylinder. However, the lower housing part 18 and/or the upper housing part 12 may have other cross-sectional shapes configured to withstand the high interior pressures within the respective housing parts 12, 18 that may be generated during operation.

As shown in Fig. 1, the lower housing part 12 ends in an insert part 14 which may have a smaller diameter than the lower housing part 12. The insert part 14 of the housing 11 may fit in a hole 74 formed in the outer wall 71 of the common rail 70. At a front end 15 of the insert part 14, at least one through hole 16 may be formed to provide a fluid or flow connection between the interior 72 of the common rail 70 and a first chamber 40 formed, e.g., by the lower housing part 12 and the insert part 14.

The lower housing part 12 and the insert part 14 of the housing 11 are mounted on the outer wall 71 of the common rail 70 and in the hole 74, respectively. Due to the high pressure in the interior 72 of the common rail 70, the lower housing part 12 and the insert part 14 may be welded to the outer wall 71 of the common rail 70. It is, of course, also possible to use other techniques for mounting the lower housing part 12 and the insert part 14 on the outer wall 71 of the common rail 70 so that no leakage occurs due to the high pressure of the fuel within the common rail 70. All known mounting techniques for mounting the safety valve in an air-tight or pressure-tight manner on the outer wall 71 of the common rail 70 can be used.

In the embodiment of the present disclosure shown in Fig. 1, the first chamber 40 within the housing 11 may accommodate a closure pin 50 having a tip 51 and an intermediate part 52. The intermediate part 52 may have a greater diameter than the pin 50 as such. The intermediate part 52 may form a bearing surface 54 facing towards the upper housing part 18. One end of a spring 56, e.g., a coil spring, may rest on the bearing surface 54 of the intermediate part 52 of the pin 50 and an opposite end of the spring 56 may rest against a wall 19 that separates the first chamber 40 from a second chamber 42 within the upper housing part 18.

The tip 51 of the pin 50 is tapered and fits in the through hole 16. The spring 56 biases the pin 50 in the direction towards the front end 15 of the insert part 14 and, therefore, the tip 51 can seal the through hole 16. In the present embodiment shown in Fig. 1, the outer diameter of the intermediate part 52 may correspond to an inner diameter of the insert part 14 such that the pin 50 may be guided by means of the snug fit of the intermediate part 52 within the insert part 14. The biasing force generated by the spring 56 may be chosen such that the tip 51 of the pin 50 lifts up from the inner wall of the through bore 16 only when the pressure within the interior 72 of the common rail 70 exceeds a predetermined pressure value, e.g., 2000 bar.

As was already mentioned above, the lower housing part 12 may define a first chamber 40 and the upper housing part 18 may define a second chamber 42. It is noted that the volume of the second chamber 42 may be greater than the volume of the lower chamber 40. The relationship between the volume of the second chamber 42 and the volume of the first chamber 40 may range between about 1.2 to 10 or may have a higher ratio. All intermediate values for this ratio should be explicitly disclosed herein, even if the intermediate values are not explicitly mentioned.

In the longitudinal sectional view of Fig. 1, it is shown that the second chamber 42 may be in fluid communication with the first chamber 40 via at least one hole, e.g., a throttling port or throttling bore 60. The number and inner diameter(s) of the throttling bore(s) 60 may be chosen such that, taking into consideration the ratio between the volumes of the two chamber 40, 42, the pressure within the chamber 42 may be substantially less than the pressure within the interior 72 of the common rail 70 when the pin 50 and the tip 51 are forced to move against the biasing force of the spring 56. The pressure within the second chamber 52 may be about 1/1.5-1/100^{th} of the pressure within the interior 72 of the common rail 70. In an exemplary embodiment of the present disclosure the inner diameter of a throttling bore may be about 2-4 mm, in particular 3-4 mm or 3,2 mm. As an example, the ratio of the volume of the first chamber 40 to the second chamber 42 may be about 1:3 to 1:10, in particular, e.g., 1:6.

To ensure that the second chamber 42 of the safety valve 10 can be vented every time, a ventilation valve 28 (the ventilation valve is only schematically shown in Fig. 1) may be provided on a lid 21 of the upper housing part 18. The ventilation valve 28 is in fluid communication with a hole 26 in the lid 21 of the upper housing part 18 and may include a closing element 29 biased by a spring 32 such that air can normally flow through a hole 30 of the ventilation valve 28 and through the hole 26 in the second chamber 42. The closing element 29 of the ventilation valve seals the hole 30 only when a pressurized fluid, e.g. pressurized fuel, is disposed within the second chamber 42.

A second embodiment of the present disclosure including a safety valve 100 is shown in Figs. 2 to 5. Fig. 2 shows a schematic perspective view of a safety valve 100 mounted on a common rail 70. The safety valve 100 includes a drain line 104 leading to a leakage tank (not shown). As may be seen from Figs. 2 to 4, a fuel line 76 for fuel having a high-pressure diverges from the common rail 70 and leads to an injection nozzle (not shown). Here, the fuel line 76 has a screw joint 78 to connect to a corresponding joint of the injection nozzle. On the left side of Fig. 2, a known arrangement of a fuel pump 80 and additional equipment is indicated.

As shown for example in Fig. 3, the safety valve 100 according to this exemplary embodiment of the present disclosure is arranged such that the axis of a screw joint 102, which is a part of an upper housing part 106, is offset by an angle α with respect to the longitudinal axis of the common rail 70.

The design of this further embodiment of a safety valve 100 according to the present disclosure is explained in more detail with reference to the longitudinal sectional view of Fig. 5. In Fig. 5 the common rail 70 is only slightly indicated. A connection piece 108 may be mounted at the common rail 70 in a pressure-tight manner. The connection piece 108 may hold an elongated spring holder 110. The spring holder 110 may extend beyond an upper front end 112 of the connection piece 108. The spring holder 110 may be screwed in a thread 114 formed in an inner wall 116 of the connection piece 108. An O-ring 118 may seal a possible gap between an outer wall 120 of the valve piece 110 and an inner wall 122 of the connection piece 108.

At a front end 124 of the valve piece 110 an insert 126 is mounted. The insert 126 has a tip.128 in which a through-bore 130 is formed. The through-bore 130 functions as a flow connection between the interior 72 of the common rail 70 and a first chamber 132 of the safety valve 100. As shown in Fig. 5, the through-bore 130 is formed with, e.g., a counter sinkhole forming a valve seat 134. A closure pin 136 may have a tip 138 having an outer circumference wall which corresponds to the counter sinkhole 134 to close and seal the through-bore 130.

At a front end opposite the tip 138 a spring bearing piece 150 may be arranged. One end 152 of the spring bearing piece 150 may be in contact with the closure pin 136. At an opposite end of the spring bearing piece 150 a bearing surface 154 may be provided on which a spring 160, e.g., a coil spring, may rest. As shown at the upper side of Fig. 5, the valve piece 110 may form another bearing surface 162 on which another end of the spring 160 rests. For example one or more washers 164 may be arranged between the bearing surface 162 and the upper end of the spring 160. Hence, the spring 160 urges the spring bearing piece 150 in the direction of the through-bore 130 with a predetermined pressure force, e.g. adjustable by means of the thickness and/or the number of washers 164. This results in that the tip 138 of the closure pin 136 closes the through-bore 130 as long as the force generated by the pressure in the interior 72 of the common rail 70 is less than the spring force with which the closure pin 136 is biased against the valve seat 134 of the through-bore 130.

As shown in Fig. 5, the first chamber 132 may extend up to the upper part of the valve piece 110 wherein the spring 160 is placed. For this reason, at least one gap or channel 170 may be provided between the inner wall of the insert 126 and an outer wall of the closure pin 136. In the present exemplary embodiment of the present disclosure three gaps 170 are provided uniformly arranged around the circumference of the closure pin 136. The gaps 170 may extend from the utmost front end of the closure pin 136 to an upper end of the closure pin 136. Via a further spacing 172 and a hole 174 a flow connection between the through-bore 130 and the upper part of the first chamber 132 in which the spring 160 may be accommodated is provided.

A pressure release reservoir 180 of the safety valve 100 may have a cross-sectional shape of a substantial circular cylinder. At a lower part of the pressure release reservoir 180 a hole 182 is provided through which the upper part of the valve piece 110 is inserted. For sealing the outer wall of the valve piece 110 against the pressure release reservoir 180 at the hole 182 a further O-ring 186 is provided. At an opposite end of the hole 182 the pressure release reservoir 180 may be closed by a lid 206 via several bolts 186. For sealing purposes another O-ring 186 is located between an outer circumference wall of the lid 206 and an inner wall of the upper reservoir part of the pressure release reservoir 180. To assure a correct position of the lid 206 on the pressure release reservoir 180 the lid 206 may be provided with a stepped outer circumference. The circumference of the outer circumference wall of this stepped contour may correspond to the diameter of the inner circumference of the upper part of the pressure release reservoir 180.

As shown in Fig. 5, the lid 206 and the pressure release reservoir 180 may form together a second chamber 188 (can also be named expansion chamber). The drain line 104 is connected via a screw joint 102 to the expansion chamber 188.

In this exemplary embodiment of a safety valve 100 shown in Fig. 5, e.g. two throttling bores 190 may be provided in a wall of the spring bearing piece 150 to form a flow connection between the first chamber 132 and the expansion chamber 188.

On one side of the pressure release reservoir 180 a threaded hole 192 is shown. This threaded bore 192 may be closed by a ventilating valve 30 as explained in connection with the exemplary embodiment of a safety valve 10 shown in Fig. 1. Hence, the expansion chamber 188 may be ventilated as long as the through-bore 130 is closed by means of the closing pin 136.

The valve piece 110 may extend through a hole 200 in the lid 206. A pressure safety arrangement 202 may hold the valve piece 110 pressure-tight at the pressure release reservoir 180. A bolt 204 may close a through-bore which is in flow connection with the first chamber 132. According an exemplary embodiment of the present disclosure, the biasing force of the spring 160 may be adjusted by the bolt 204 such that a desired biasing force can be reached and, hence, the safety valve 100, in particular the through-bore 130 will be opened when the pressure within the interior 72 of the common rail 70 exceeds a predetermined pressure value. Here, as already mentioned above, the biasing force may be adjusted by means of one ore more washers 164. In this case, the bolt 204 may also be omitted and the lid 206 may be closed.

With reference to the Figs. 6 to 9 some further exemplary embodiments of the safety valve 100 are explained and, in particular, the various pressure curves within the common rail, the first chamber 132 (spring chamber; SP chamber), the pressure within the second chamber 188 (expansion chamber or EX chamber) and the pressure within the drain line 104 are shown.

In Fig. 6 the safety valve 100 has a first design. In particular, four throttling bores 190 having a diameter of 8 mm may be provided to provide a flow connection between the first chamber 132 and the second chamber 188. The second chamber 188 may have a diameter of about 120 mm and a height of about 40 mm. Consequently, the volume of the second chamber 188 is about 1808 cm³. The diameter of the drain line 104 is, e.g., about 16 mm.

In Fig. 7 the safety valve 100 has a second design similar to the first design, but instead of a diameter of 120 mm for the second chamber 188 the diameter may be about 60 mm. In particular, four throttling bores 190 having a diameter of 8 mm may be provided to provide a flow connection between the first chamber 132 and the second chamber 188. The second chamber 188 may have diameter of about 60 mm and a height of about 40 mm. Consequently, the volume of the second chamber 188 is about 452 cm³. The diameter of the drain line 104 is, e.g., about 16 mm.

The safety valve 100 shown in Fig. 8 has a third design similar to the second design, but the throttling bores 190 may have a diameter of 4 mm instead of 8 mm. In particular, four throttling bores 190 having a diameter of 4 mm may be provided to provide a flow connection between the first chamber 132 and the second chamber 188. The second chamber 188 may have diameter of about 60 mm and a height of about 40 mm. Consequently, the volume of the second chamber 188 is about 452 cm³. The diameter of the drain line 104 is, e.g., about 16 mm.

Finally, the safety valve 100 shown in Fig. 9 has a fourth design similar to the third design, but the number of throttling bores 190 may be reduced to 1 instead of 4. In particular, one single throttling bore 190 having a diameter of 4 mm may be provided to provide a flow connection between the first chamber 132 and the second chamber 188. The second chamber 188 may have diameter of about 60 mm and a height of about 40 mm. Consequently, the volume of the second chamber 188 is about 452 cm³. The diameter of the drain line 104 is, e.g., about 16 mm.

### Industrial Applicability

In the following, the basic functions of the exemplary safety valve 10 described above and shown in Fig. 1 are explained in more details.

During operation of an internal combustion engine (not shown) the interior 72 of the common rail 70 is filled with pressurized fuel, e.g., diesel or heavy oil fuel. If the pressure within the interior 72 of the common rail 70 is about, e.g., 2000 bar and the safety valve 10 opens due to the excessively high pressure within the interior 72 of the common rail 70, the pressurized fuel within the interior 72 may flow through the through-bore 16 into the first chamber 40. Due to the restricted or narrowed cross-section of the passage in the first chamber 40, a first pressure drop may occur when the fuel flows into the first chamber 40. Due to the shape of the throttling port 60, a further pressure drop may occur and due to the greater volume of the second chamber 42 in comparison to the first chamber 40, a reduced pressure within the pressure chamber 42 of, e.g., less than about 20 bar, may be obtained. The pressurized fuel having the reduced pressure within the second chamber 42 may then flow out through a drain line 22 back to a tank (not shown) or any other collecting reservoir. Herein, the drain line 22 is connected to the upper reservoir part 18 via a socket 24 screwed onto a connecting piece 20 of the upper reservoir part 18.

The basic functions of the safety valve 100 are explained in more details on the basis of the exemplary embodiment of the safety valve 100 as it is shown in Figs. 2 to 5.

During operation of an internal combustion engine (not shown) the interior 72 of the common rail 70 is filled with pressurized fuel, e.g., diesel or heavy oil fuel. The pressure may amount to about 1400-2000 bar or even more. The interior pressure within the common rail 70 depends on the injection nozzles and further equipment chosen for distributing fuel to combustion chambers of the internal combustion engine. Therefore, all pressure values mentioned herein are only exemplary. Consequently, the common rail 70 to which a safety valve 100 as mentioned before may be coupled may withstand a predetermined maximum pressure, e.g., 1500 or 1600 bar or even more. If for any reason the pressure within the interior 72 of the common rail 70 exceeds the maximum pressure which may be adjusted by the bolt 204, the tip 138 of the closure pin 136 may be being lifted up from the seat 134 against the biasing force of the spring 160. Consequently, the pressurized fuel may flow through the through-bore 130 in the first chamber 132 and via the gap 170 and the hole 174 further in that part of the first chamber 132 in which the spring 160 may be arranged.

Due to this arrangement the pressure of the fuel in the first chamber 132 may already dramatically reduced against the original pressure in the interior 72 of the common rail 70. The pressure may amount to about 1/5 ^{th} to 1/100^{th} of the original pressure in the interior 72 of the common rail 70.

The fuel within the first chamber 132 having a pressure which is dramatically reduced in comparison to the original pressure in the interior 72 of the common rail 70 may flow further through the throttling bores 190 in the second chamber 188. Due to the chosen diameter of the throttling bores 190 and/or due to the number of throttling ports 190 and/or due to the volume of the second chamber 188 the pressure of the fuel within the second chamber 188 may be further reduced to about a pressure which amounts to about 1/1.5^{th} to 1/100^{th} of the pressure in the first chamber 132. Again, the number and/or size of the throttling ports 190 connecting the first chamber 132 and the second chamber 188 may influence the pressure reduction resulting when a fuel flows from the first chamber 132 in the second chamber 188.

It has to be noted that the second pressure chamber 188 is preferably empty and ventilated before the closing pin 136 may be opened. Therefore, a ventilation valve as for example shown in Fig. 1 may be inserted in the threaded hole 192 to assure that the second chamber 188 is filled with air having a pressure corresponding to the ambient pressure.

The fuel within the second pressure chamber 188 having a reduced pressure versus the original pressure within the common rail 70 may flow out of the pressure chamber 188 through the drain line 104. Due to the fact that the pressure of the fuel drained in the drain line 104 will be further reduced in the drain line 104 the drain line 104 may be a single wall drain line of ordinary construction, in particular normally no double walled drain line may be necessary any more.

With reference to the Figs. 6 to 9 the pressure curves for the further exemplary embodiments of the safety valve 100 are explained. In particular, the various pressure curves of the pressure in the common rail, the pressure in the first chamber 132 (spring chamber; SP chamber), the pressure in the second chamber 188 (expansion chamber or EX chamber) and the pressure in the drain line 104 are shown over the time (in particular after opening the through-bore 130).

On the right side of Fig. 6, various pressure curves of the exemplary embodiment of the safety valve 100 having the first design mentioned above are shown. The upper diagram shows the run of the pressure within the common rail 70. If the pressure within the common rail 70 exceeds about 1500 bar the closing pin 136 is being lifted from the valve seat 134. As explained above, the fuel having a pressure of about 1500 bar flows through the through-bore 130 in the first chamber 132 (also named spring chamber). As shown in the second diagram, the maximum pressure in the spring chamber 132 may amount to about 17.5 bar and may reduce very quick within about 0.01 sec to a value of, e.g., about 0.1 bar. The pressure curve of the pressure within the second chamber 188 is shown in the third diagram. Here it is shown that the maximum pressure within the pressure chamber 188 may amount to about 10.3 bar and may reduce very quick to a pressure of, e.g., about 1.5 bar. The pressure curve of the pressure within the drain line 104 is shown in the fourth diagram. Here, a skilled person may see that the maximum pressure within the drain line 104 may amount to about 8.46 bar and may reduce very quick to a pressure of about 1.8 bar.

On the right side of Fig. 7, various pressure curves of the exemplary embodiment of the safety valve 100 having the second design mentioned above are shown. The upper diagram shows the run of the pressure within the common rail 70. If the pressure within the common rail 70 exceeds about 1500 bar the closing pin 136 is being lifted from the valve seat 134. As explained above, the fuel having a pressure of about 1500 bar flows through the through-bore 130 in the first chamber 132 (also named spring chamber). As shown in the second diagram of Fig. 7, the maximum pressure in the spring chamber 132 may amount in this second design to about 22.3 bar and may reduce very quick within about 0.01 sec to a value of, e.g., about 0.2 bar. The pressure curve of the pressure within the second chamber 188 is shown in the third diagram. Here it is shown that the maximum pressure within the pressure chamber 188 may amount to about 15.4 bar and may reduce very quick to a pressure of, e.g., about 2 bar. The pressure curve of the pressure within the drain line 104 is shown in the fourth diagram. Here, a skilled person may see that the maximum pressure within the drain line 104 may amount to about 12.45 bar and may reduce very quick to a pressure of about 1.8 bar.

On the right side of Fig. 8, various pressure curves of the exemplary embodiment of the safety valve 100 having the third design mentioned above are shown. The upper diagram shows the run of the pressure within the common rail 70. If the pressure within the common rail 70 exceeds about 1500 bar the closing pin 136 is being lifted from the valve seat 134. As explained above, the fuel having a pressure of about 1500 bar flows through the through-bore 130 in the first chamber 132 (also named spring chamber). As shown in the second diagram, the maximum pressure in the spring chamber 132 may amount in this second design to about 74.5 bar and may reduce very quick within about 0.01 sec to a value of, e.g., about 0.5 bar. The pressure curve of the pressure within the second chamber 188 is shown in the third diagram. Here it is shown that the maximum pressure within the pressure chamber 188 may amount to about 10.1 bar and may reduce very quick to a pressure of, e.g., about 1.8 bar. The pressure curve of the pressure within the drain line 104 is shown in the fourth diagram. Here, a skilled person may see that the maximum pressure within the drain line 104 may amount to about 8.46 bar and may reduce very quick to a pressure of about 1.8 bar.

Finally, various pressure curves of the exemplary embodiment of the safety valve 100 having the fourth design mentioned above are shown in Fig. 9. The upper diagram shows the run of the pressure within the common rail 70. If the pressure within the common rail 70 exceeds about 1500 bar the closing pin 136 is being lifted from the valve seat 134. As explained above, the fuel having a pressure of about 1500 bar flows through the through-bore 130 in the first chamber 132 (also named spring chamber). As shown in the second diagram, the maximum pressure in the spring chamber 132 may amount in this second design to about 234 bar and may reduce very quick within about 0.015 sec to a value of, e.g., about 2.5 bar. The pressure curve of the pressure within the second chamber 188 is shown in the third diagram. Here it is shown that the maximum pressure within the pressure chamber 188 may amount to about 3.08 bar and may reduce very quick to a pressure of, e.g., about 1.4 bar. The pressure curve of the pressure within the drain line 104 is shown in the fourth diagram. Here, a skilled person may see that the maximum pressure within the drain line 104 may amount to about 2.64 bar and may reduce very quick to a pressure of about 1.4 bar.

Although the preferred embodiments of this invention have been described herein, improvements and modifications may be incorporated without departing from the scope of the following claims.

## Claims

1. A safety valve (10; 100) configured to be arranged on a pressurized device such as a common rail (70) of an internal combustion engine, comprising:
- a housing (11; 106),
- a first chamber (40; 132) arranged within said housing (11; 106), said first chamber (40;132) having a first volume and an inlet port (16; 130) configured to provide a flow connection between said pressurized device (70) and said first chamber (40; 132), wherein a spring-loaded closing pin (50; 136) is arranged to close said inlet port (16; 130) as long as a predetermined pressure within the pressurized device (70) is not exceeded,
- a spring (56; 160) accommodated within said first chamber (40; 132), said spring (56; 160) biasing the closing pin (50; 136) with a predetermined force such that a tip (51; 138) of the closing pin (50; 136) seals a valve seat of said inlet port (16; 130);
- a second chamber (42; 188) having a second volume greater than the first volume of said first chamber (40; 132) and an outlet port (22; 102) configured to drain a fluid within the second chamber (42; 188) out of the second chamber (42; 188), said second chamber (42; 188) being arranged within said housing (11; 106) and being in flow connection with said first chamber (40; 132) via at least one throttling bore (60; 190), said at least one throttling bore (60; 190) and the second volume of said second chamber (42; 188) being designed such that a pressure in said second chamber (42; 188) is below a second predetermined pressure.

2. The safety valve (10; 100) of claim 1, wherein said volume of said second chamber (42; 188) is at least 1.2-fold the volume of the first chamber (40; 132).

3. The safety valve (10; 100) of claim 1 or 2, wherein the volume of said second chamber (42; 188) is constant.

4. The safety valve (10; 100) of claim 3, further comprising a spring force adjustment arrangement (164) configured to adjust the predetermined force with which the tip (51; 138) of the closing pin (50; 136) is urged against said valve seat of said inlet port (16; 130).

5. The safety valve (10; 100) of one or more of the preceding claims, wherein said at least one throttling bore (60; 190) is designed such that a pressure in said second chamber (42; 188) is about 1/2 to 1/100^{th} of the pressure in said first chamber (40; 132).

6. The safety valve (10; 100) of one or more of the preceding claims, further comprising a ventilation valve (28) configured to ventilate said second chamber (42) as long as said closing pin (50) seals said inlet port (72).

7. The safety valve (10; 100) of one or more of the preceding claims, wherein said second chamber (42; 188) is separated by a partition wall (19) from said first chamber (40; 132).

8. The safety valve (100) of one or more of the preceding claims, further comprising a lid (206) closing said second chamber (188), wherein said housing includes a first housing part (110) and a second housing part (180), said first and second housing parts (110, 180) are rigidly connected by means of a connecting part (110) extending through said second chamber (188) and being supported on said lid (206).

9. The safety valve (100) of claim 8, wherein said connecting part (110) is hollow and forms at least a part of the first chamber (132) in which said pressure spring (160) is arranged.

10. The safety valve (100) of claim 9, wherein said connecting part (110) includes said at least one throttling bore (190) which forms a flow connection between said first chamber (132) and said second chamber (188).

11. A common rail fuel injection system constructed to be used at an internal combustion engine, comprising:
- a common rail (70),
- at least one fuel pump (80) connected to the common rail (70) for delivering pressurized fuel into the common rail (70), and
- at least one safety valve (10; 100) according to one or more of the preceding claims, the safety valve (10; 100) being coupled to said common rail (70).

12. A method for protecting a pressurized device (70) against an excessive high-pressure in an interior (72) of said pressurized device (70), comprising the steps of:
- opening an inlet port (16; 130) of a first chamber (40; 132) of a safety valve (10; 100) coupled to said pressurized device (70) if a first predetermined pressure within the pressurized device (70) is exceeded by lifting up a tip (51; 138) of a closing pin (50; 136) from a valve seat of said inlet port (16; 130) against a biasing force of a spring (56; 160) accommodated within said first chamber (40; 132);
- allowing the fuel in said first chamber (40; 132) to pass into a second chamber (42; 188) via at least one throttling bore (60; 190) such that the pressure of the fuel in said second chamber (42; 188) is reduced below a second predetermined pressure; and
- draining the fuel out of the second chamber (42; 188).

13. The method of claim 12, comprising the further step of: ventilating said second chamber (42; 188).

14. The method of claim 13, wherein the step of ventilating of said second chamber (42; 188) is being interrupted if the second predetermined pressure within said second chamber (42; 188) is being exceeded

## Patentansprüche

1. Sicherheitsventil (10; 100) zur Anordnung an einer druckbeaufschlagten Vorrichtung wie z.B. ein Common Rail (70) eines Verbrennungsmotors, mit
- einem Gehäuse (11; 106),
- einer in dem Gehäuse (11; 106) angeordneten ersten Kammer (40; 132), die ein erstes Volumen und eine eine Strömungsverbindung zwischen der druckbeaufschlagten Vorrichtung (70) und der ersten Kammer (40; 132) schaffende Einlassöffnung (16; 130) aufweist, wobei ein federbelasteter Verschlussstift (50; 136) angeordnet ist, der die Einlassöffiung (16; 130) schließt, solange ein vorbestimmter Druck in der druckbeaufschlagten Vorrichtung (70) nicht überschritten wird,
- einer in der ersten Kammer (40; 132) untergebrachten Feder (56; 160), die den Verschlussstift (50; 136) mit einer vorbestimmten Kraft derart vorspannt, dass eine Spitze (51; 138) des Verschlussstifts (50; 136) einen Ventilsitz der Einlassöffnung (16; 130) abdichtet;
- einer zweiten Kammer (42; 188) mit einem zweiten Volumen, das größer ist als das erste Volumen der ersten Kammer (40; 132), und einer Auslassöffnung (22; 102), die dazu konfiguriert ist, ein in der zweiten Kammer (42; 188) vorhandenes Fluid aus der zweiten Kammer (42; 188) entweichen zu lassen, wobei die zweite Kammer (42; 188) in dem Gehäuse (11; 106) angeordnet ist und über mindestens eine Drosselbohrung (60; 190) in Strömungsverbindung mit der ersten Kammer (40; 132) ist, wobei die mindestens eine Drosselbohrung (60; 190) und das zweite Volumen der zweiten Kammer (42; 188) so ausgebildet sind, dass ein Druck in der zweiten Kammer (42; 188) unter einem zweiten vorbestimmten Druck liegt.

2. Sicherheitsventil (10; 100) nach Anspruch 1, wobei das Volumen der zweiten Kammer (42; 188) mindestens das 1,2-fache des Volumens der ersten Kammer (40; 132) beträgt.

3. Sicherheitsventil (10; 100) nach Anspruch 1 oder 2, wobei das Volumen der zweiten Kammer (42; 188) konstant ist.

4. Sicherheitsventil (10; 100) nach Anspruch 3, ferner enthaltend eine Federkrafteinstelleinrichtung (164), die dazu konfiguriert ist, die vorbestimmte Kraft einzustellen, mit der die Spitze (51; 138) des Verschlussstifts (50; 136) gegen den Ventilsitz der Einlassöffnung (16; 130) gedrückt wird.

5. Sicherheitsventil (10; 100) nach einem oder mehreren der vorhergehenden Ansprüche, wobei die mindestens eine Drosselbohrung (60; 190) so ausgebildet ist, dass ein Druck in der zweiten Kammer (42; 188) etwa 1/2 bis 1/100 des Drucks in der ersten Kammer (40; 132) ist.

6. Sicherheitsventil (10; 100) nach einem oder mehreren der vorhergehenden Ansprüche, ferner enthaltend ein Belüftungsventil (28), das dazu konfiguriert ist, die zweite Kammer (42) zu belüften, solange der Verschlussstift (50) die Einlassöffnung (72) abdichtet.

7. Sicherheitsventil (10; 100) nach einem oder mehreren der vorhergehenden Ansprüche, wobei die zweite Kammer (42; 188) durch eine Trennwand (19) von der ersten Kammer (40; 132) getrennt ist.

8. Sicherheitsventil (100) nach einem oder mehreren der vorhergehenden Ansprüche, ferner enthaltend einen Deckel (206), der die zweite Kammer (188) abschließt, wobei das Gehäuse einen ersten Gehäuseteil (110) und einen zweiten Gehäuseteil (180) enthält, und der erste und zweite Gehäuseteil (110; 180) mittels eines sich durch die zweite Kammer (188) erstreckenden und an dem Deckel (206) gehaltenen Verbindungsteils (110) starr verbunden sind.

9. Sicherheitsventil (100) nach Anspruch 8, wobei der Verbindungsteil (110) hohl ist und zumindest einen Teil der ersten Kammer (132) bildet, in der die Druckfeder (160) angeordnet ist.

10. Sicherheitsventil (100) nach Anspruch 9, wobei der Verbindungsteil (110) die mindestens eine Drosselbohrung (190) enthält, die eine Strömungsverbindung zwischen der ersten Kammer (132) und der zweiten Kammer (188) bildet.

11. Common Rail-Kraftstoffeinspritzsystem, das zur Verwendung an einem Verbrennungsmotor ausgebildet ist, enthaltend:
- ein Common Rail (70),
- mindestens eine mit dem Common Rail (70) verbundene Kraftstoffpumpe (80) zum Zuführen von druckbeaufschlagtem Kraftstoff zu dem Common Rail (70), und
- mindestens ein Sicherheitsventil (10; 100) nach einem oder mehreren der vorhergehenden Ansprüche, wobei das Sicherheitsventil (10; 100) mit dem Common Rail (70) verbunden ist.

12. Verfahren zum Schützen einer druckbeaufschlagten Vorrichtung (70) vor einem übermäßig hohen Druck in einem Inneren (72) der druckbeaufschlagten Vorrichtung (70), enthaltend die Schritte:
- Öffnen einer Einlassöffnung (16; 130) einer ersten Kammer (40; 132) eines mit der druckbeaufschlagten Vorrichtung (70) verbundenen Sicherheitsventils (10; 100), wenn ein erster vorbestimmter Druck innerhalb der druckbeaufschlagten Vorrichtung (70) überschritten wird, durch Anheben einer Spitze (51; 138) eines Verschlussstifts (50; 136) von einem Ventilsitz der Einlassöffnung (16; 130) gegen eine Vorspannkraft einer Feder (56; 160), die in der ersten Kammer (40; 132) untergebracht ist;
- Ermöglichen, dass der Kraftstoff in der ersten Kammer (40; 132) über mindestens eine Drosselbohrung (60; 190) in eine zweite Kammer (42; 188) strömt, so dass der Kraftstoffdruck in der zweiten Kammer (42; 188) unter einen zweiten vorbestimmten Druck fällt; und
- Ablassen des Kraftstoffs aus der zweiten Kammer (42; 188).

13. Verfahren nach Anspruch 12, ferner enthaltend den Schritt: Belüften der zweiten Kammer (42; 188).

14. Verfahren nach Anspruch 13, wobei der Schritt des Belüftens der zweiten Kammer (42; 188) unterbrochen wird, wenn der zweite vorbestimmte Druck in der zweiten Kammer (42; 188) überschritten wird.

## Revendications

1. Soupape de sûreté (10 ; 100) configurée pour être agencée sur un dispositif pressurisé tel qu'une rampe commune (70) d'un moteur à combustion interne, comprenant :
- un logement (11 ; 106),
- une première chambre (40 ;132) agencée au sein dudit logement (40 ; 106), ladite première chambre (40 ; 132) ayant un premier volume et une lumière d'admission (16 ; 130) configurée pour fournir un raccordement d'écoulement entre ledit dispositif pressurisé (70) et ladite première chambre (40 ; 132), où un goujon de fermeture chargé de ressort (50 ; 136) est agencé pour fermer ladite lumière d'admission (16 ; 130) tant qu'une pression prédéterminée au sein du dispositif pressurisé (70) n'est pas dépassée,
- un ressort (56 ; 160) logé au sein de ladite première chambre (40 ; 132), ledit ressort (56 ; 160) sollicitant le goujon de fermeture (50 ; 136) avec une force prédéterminée de telle sorte qu'un embout (51 ; 138) du goujon de fermeture (50 ; 136) obture un siège de soupape de ladite lumière d'admission (16 ; 130) ;
- une seconde chambre (42 ; 188) ayant un second volume plus grand que le premier volume de ladite première chambre (40 ; 132) et un orifice de refoulement (22 ; 102) configuré pour purger un fluide au sein de la seconde chambre (42 ; 188) hors de la seconde chambre (42 ; 188), ladite seconde chambre (42 ; 188) étant agencée au sein dudit logement (11 ; 106) et étant en raccordement d'écoulement avec ladite première chambre (40 ; 132) via au moins un alésage d'étranglement (60 ; 190), ledit au moins un alésage d'étranglement (60 ; 190) et le second volume de ladite seconde chambre (42 ; 188) étant conçus de telle sorte qu'une pression dans ladite seconde chambre (42 ; 188) est en dessous d'une seconde pression prédéterminée.

2. Soupape de sûreté (10 ; 100) selon la revendication 1, dans laquelle ledit volume de ladite seconde chambre (42 ; 188) est au moins 1,2 fois le volume de la première chambre (40 ; 132).

3. Soupape de sûreté (10 ; 100) selon la revendication 1 ou 2, dans laquelle le volume de ladite seconde chambre (42 ; 188) est constant.

4. Soupape de sûreté (10 ; 100) selon la revendication 3, comprenant en outre un agencement d'ajustement de force de ressort (164) configuré pour ajuster la force prédéterminée avec laquelle l'embout (51 ; 138) du goujon de fermeture (50 ; 136) est poussé contre ledit siège de soupape de ladite lumière d'admission (16 ; 130).

5. Soupape de sûreté (10 ; 100) selon une ou plusieurs des revendications précédentes, dans laquelle ledit au moins un alésage d'étranglement (60 ; 190) est conçu de telle sorte qu'une pression dans ladite second chambre (42 ; 188) est environ 1/2 à 1/100^{ème} de la pression de ladite première chambre (40 ; 132).

6. Soupape de sûreté (10 ; 100) selon une ou plusieurs des revendications précédentes, comprenant en outre une soupape de ventilation (28) configurée pour ventiler ladite seconde chambre (42) tant que ledit goujon de fermeture (50) obture ladite lumière d'admission (72).

7. Soupape de sûreté (10 ; 100) selon une ou plusieurs des revendications précédentes, dans laquelle ladite seconde chambre (42 ; 188) est séparée par une cloison (19) de ladite première chambre (40 ; 132).

8. Soupape de sûreté (10 ; 100) selon une ou plusieurs des revendications précédentes, comprenant en outre un couvercle (206) fermant ladite seconde chambre (188), où ledit logement inclut une première partie de logement (110) et une seconde partie de logement (180), lesdites première et seconde parties de logement (110, 180) sont raccordées rigidement au moyen d'une partie de raccordement (110) s'étendant à travers ladite seconde chambre (188) et étant supportée sur ledit couvercle (206).

9. Soupape de sûreté (10 ; 100) selon la revendication 8, dans laquelle ladite partie de raccordement (110) est creuse et forme une partie de la première chambre (132) dans laquelle ledit ressort de pression (160) est agencé.

10. Soupape de sûreté (10 ; 100) selon la revendication 9, dans laquelle ladite partie de raccordement (110) inclut ledit au moins un alésage d'étranglement (190) qui forme un raccordement d'écoulement entre ladite première chambre (132) et ladite seconde chambre (188).

11. Système d'injection de carburant à rampe commune construit pour être utilisé dans un moteur à combustion interne, comprenant :
- une rampe commune (70),
- au moins une pompe de carburant (80) raccordée à la rampe commune (70) pour délivrer du carburant pressurisé dans la rampe commune (70), et
- au moins une soupape de sûreté (10 ; 100) selon une ou plusieurs des revendications précédentes, la soupape de sûreté (10 ; 100) étant couplée à la rampe commune (70).

12. Procédé de protection d'un dispositif pressurisé (70) contre une haute pression excessive dans un intérieur (72) dudit dispositif pressurisé (70), comprenant les étapes consistant à :
- ouvrir une lumière d'admission (16 ; 130) d'une première chambre (40 ; 132) d'une soupape de sûreté (10 ; 100) couplée audit dispositif pressurisé (70) si une première pression prédéterminée au sein du dispositif pressurisé (70) est dépassée en soulevant un embout (51 ; 138) d'un goujon de fermeture (50 ; 136) à partir d'un siège de soupape de ladite lumière d'admission (16 ; 130) contre une force de sollicitation d'un ressort (56 ; 160) logé au sein de ladite première chambre (40 ; 132) ;
- laisser le carburant dans ladite première chambre (40 ; 132) passer dans une seconde chambre (42 ; 188) via au moins un alésage d'étranglement (60 ; 190) de telle sorte que la pression du carburant dans ladite seconde chambre (42 ; 188) est réduite en dessous d'une seconde pression prédéterminée ; et
- purger le carburant hors de la seconde chambre (42 ; 188).

13. Procédé selon la revendication 12, comprenant l'étape supplémentaire consistant à :
- ventiler ladite seconde chambre (42 ; 188).

14. Procédé selon la revendication 13, dans lequel l'étape de ventilation de ladite seconde chambre (42 ; 188) est interrompue si la seconde pression prédéterminée au sein de ladite seconde chambre (42 ; 188) est dépassée.
